# EUROPÄISCHE PATENTANMELDUNG

(11) **EP 2 581 147 A1**
(43) Veröffentlichungstag der Anmeldung: **17.04.2013**
(21) Anmeldenummer: 12184467.4
(22) Anmeldetag: 14.09.2012
(51) Int. Cl.: B21D 53/88, B21D 19/08, B21D 41/04, B21D 22/26, B23K 33/00

(54) **Verschweißbarer Durchzug**

(30) Priorität: 11.10.2011 DE 202011106577 U
(71) Anmelder: Automobiltechnik Dürbheim eine Betriebsstätte Der Magna International Stanztechnik GmbH, 78589 Dürbheim (DE)
(72) Erfinder: Spitznagel, Bernhard, 78606 Seitingen-Oberflacht (DE)
(74) Vertreter: Beck, Alexander

(57) **Zusammenfassung**

Verschweißbarer Durchzug (112), der duch Eindrücken oder Anprägen zumindest über einen Teil (126) seiner Länge so zusammengedrückt ist, dass sich die gegenüberliegenden Innenflächen der Tube berühren, wobei der zusammengedrückte Teil (126) der Tube einen L- oder U-förmigen Querschnitt aufweist, und der durch Eindrücken oder Anprägen zusammengedrückte Teil (126) des Durchzuges (112) vorher aufgeweitet worden ist.

## Beschreibung

Die vorliegende Erfindung betrifft einen verschweißbaren Durchzug in Blechumformteilen.

Durchzüge oder Tuben in Blechumformteilen sind seit längerem bekannt. Bei moderneren, komplexeren Blechumformteilen stellte sich zunehmend die Aufgabe, dass andere Blechteile an diese Durchzüge oder Tuben angeschweißt werden sollten.

Solche Durchzüge, die aus fertigungstechnischen Gründen außen stets die Form eines Zylinders aufweisen, sind aus diesem Grunde nur schwer zu verschweißen. Eine Verschweißung ist ausschließlich mit dem MAG-Schweißverfahren möglich. Auch dann ist die Festigkeit der Schweißung nicht besonders gut, da aus geometrischen Gründen zwischen der Mantelfläche des zylinderförmigen Durchzuges oder der zylinderförmigen Tube und dem Blech jeweils nur eine Berührungslinie zur Verfügung steht, und keine Berührungsfläche.

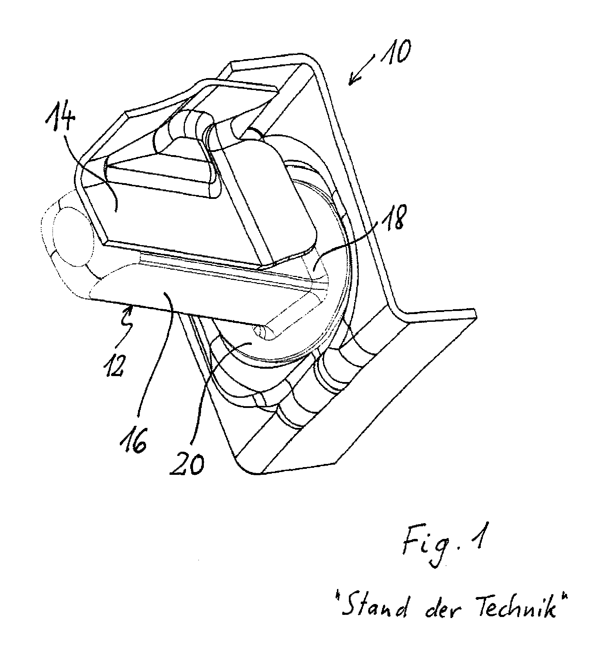

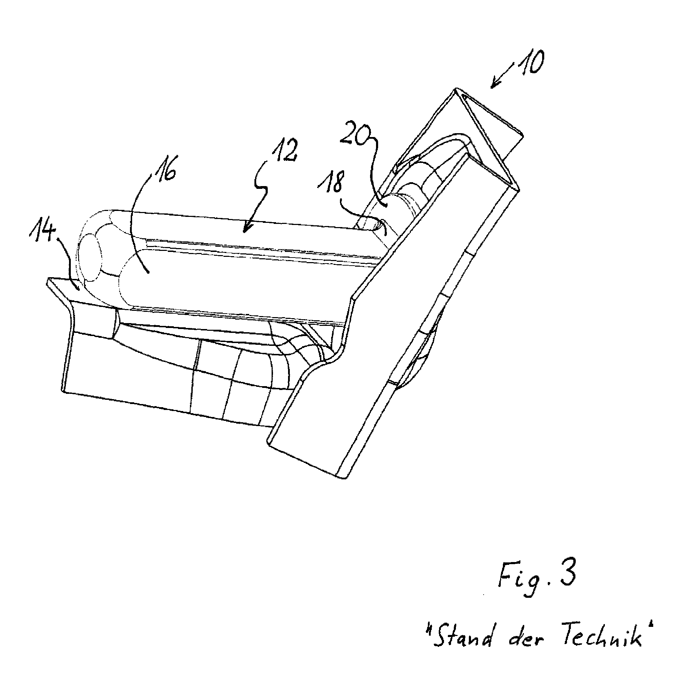

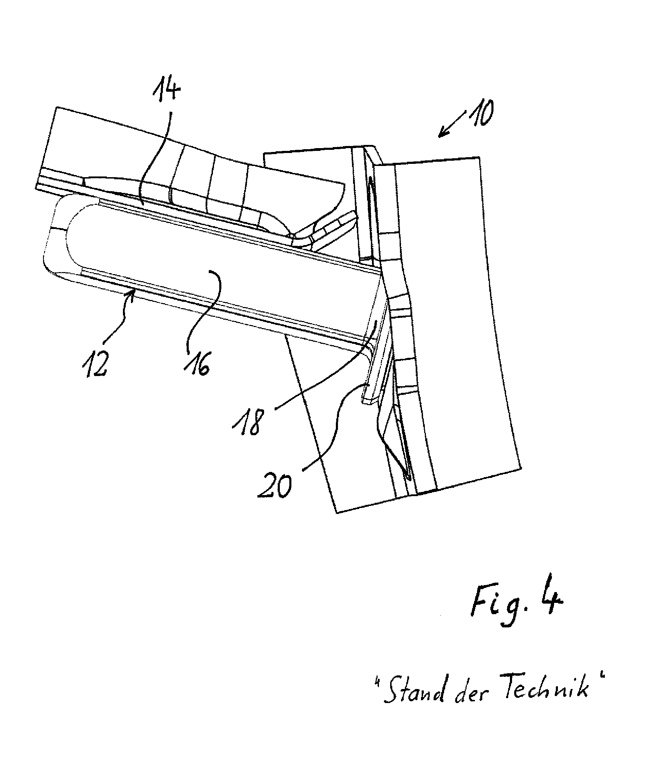

Sollten trotzdem andere Verschweißungs- oder Verbindungsverfahren zwischen dem tubenartigen Teil und den Blechen Anwendung finden, also beispielsweise Punktschweißen, Buckelschweißen oder sogar Kleben oder Löten, musste man im Stand der Technik zu einer sehr aufwendigen Hilfslösung greifen, indem anstelle der Tube ein entsprechendes Vollmaterialteil mit quadratischen Querschnitt in das Blechumformteil eingesetzt und dort festgeschweißt werden musste. Diese Lösung ist in den anliegenden Figuren 1 bis 4 dargestellt.

Diese Lösung ist jedoch fertigungstechnisch nur mit sehr großem Aufwand umzusetzen. Das Vollmaterialteil muss separat vorgehalten und zugeführt werden, es erfordert zusätzliche Schweißvorgänge und damit erheblichen Energieaufwand, dieses Teil herzustellen, und dieses Teil weist einen erheblichen Materialbedarf und damit auch ein erhebliches zusätzliches Gewicht auf.

Ausgehend von diesem Stand der Technik ist es daher Aufgabe der vorliegenden Erfindung, einen Durchzug oder eine Tube zu schaffen, die mit den Techniken der normalen Blechumformtechnik hergestellt werden kann und trotzdem mittels sämtlicher möglicher Verfahren wie Punktschweißen, Buckelschweißen, Kleben oder Löten mit einem flächigen Blech verbunden werden kann.

Erfindungsgemäß wird diese Aufgabe dadurch gelöst, dass ein solcher Durchzug oder eine solche Tube durch Eindrücken oder Anprägen zumindest über einen Teil seiner Länge so zusammengedrückt werden, dass sich die gegenüberliegenden Innenflächen der Tube berühren. Besonders bevorzugt ist dabei die Ausbildung eines L- oder U-förmigen Querschnitts. Auf diese Weise ist die äußere Oberfläche des Durchzugs zumindest in dem mit dem Blech zu verbindenden Bereich nicht mehr die Mantelfläche eines Zylinders, sondern eine plane Fläche, die in bekannter Weise durch Punktschweißen, Buckelschweißen, Kleben oder Löten mit einem planen Blech verbunden werden kann.

Die erfindungsgemäße Tube beziehungsweise Durchzug können mit dem üblichen Fertigungsschritten der Blechumformtechnik aus dem normalen Blech-Umformteil hergestellt werden, ohne dass zusätzliche Vollmaterialteile eingesetzt und eingeschweißt werden müssten, wie dies in dem gezeigten Stand der Technik der Fall ist.

Besonders bevorzugt ist es dabei, wenn der durch Eindrücken oder Anprägen verformte Bereich des Durchzuges oder der Tube vorher aufgeweitet worden ist. Auf diese Weise steht eine größere plane Fläche zur Verbindung mit dem planen Blech zur Verfügung und gleichzeitig ist das Eindrücken oder Anprägen des durch Aufweiten dünnwandig gewordenen Durchzuges technisch einfacherer.

Eine besonders einfache Herstellung des eingedrückten oder angeprägten Bereiches ergibt sich, wenn der Winkel im L-förmigen Querschnitt abgerundet ist und etwa 90° beträgt. Dadurch wird auch eine optimale Verformungsstabilität in diesem Bereich des Durchzuges erreicht.

Weiter ist es besonders bevorzugt, wenn die beiden Schenkel des L-förmigen Querschnittes etwa gleich lang sind. Auf diese Weise können sogar an zwei Seiten des Durchzuges plane Bleche angebracht werden, außerdem ergibt sich eine optimale Verformungsstabilität.

Die vorliegende Erfindung wird im Folgenden anhand der in der Anlage beigefügten Zeichnungen näher erläutert. Es zeigt:
Fig. 1 einen mit einem planen Blech punktverschweißbaren Durchzug, der gemäß dem Stand der Technik mittels eines eingesetzten und eingeschweißten Vollmaterialteiles ausgeführt ist, in dreidimensionaler perspektivischer Darstellung.
Fig. 2 den Durchzug gemäß des Standes der Technik der Fig, 1 von der anderen Seite, ebenfalls in einer perspektivischen, dreidimensionalen Darstellung;
Fig. 3 den Durchzug des Standes der Technik der Fig. 1 aus einer weiteren Ansicht perspektivisch dargestellt;
Fig. 4 den Durchzug gemäß des Standes der Technik der Fig. 1 von der Seite;
Fig. 5 einen erfindungsgemäßen Durchzug mit zugehörigem Blechbauteil in perspektivischer Darstellung;
Fig. 6 den Durchzug der Fig. 5 aus einer anderen Perspektive;
Fig. 7 den erfindungsgemäßen Durchzug der Fig. 5 aus einer weiteren Perspektive; und
Fig. 8 den erfindungsgemäßen Durchzug der Fig. 5 von der Seite.

Zum besseren Verständnis der vorliegenden Erfindung soll zuerst ein entsprechendes Blechbauteil gemäß dem Stand der Technik erläutert werden, da sich so die Vorteile der vorliegenden Erfindung erläutern lassen. Zu diesem Zweck zeigt Fig. 1 ein Blechbauteil 10, in welches ein Durchzug 12 eingesetzt ist. Dieser Durchzug 12 soll mit einem planen Blechteil 14 durch Punktschweißen, Buckelschweißen, Kleben oder Löten verbunden werden. Hierzu ist eine plane Oberfläche auf dem Durchzug 12 erforderlich. Normale Durchzüge gemäß dem Stand der Technik konnten dies nicht bieten. Gemäß dem Stand der Technik musste daher der Durchzug 12 als ein stangenförmiges Vollmaterialteil 16 mit rechteckigem Querschnitt ausgebildet werden, welches an seinem Fuß mit einem Bund 20 verbunden ist, der hier einen kreisförmigen Außenumfang aufweist, mit dem er mit dem Blechbauteil 10 durch Buckelschweißen (Widerstandsschweißen) verschweißt ist.

Aufgrund der bei dem Bauteil der Fig. 1 bis 4 erforderlichen vielen Schweißvorgänge ist der Herstellungsaufwand sehr hoch. Darüber hinaus sind alle solchen Schweißnähte korrosionsanfällig. Schließlich sind der Materialbedarf und das Gewicht für ein Vollmaterialteil in Form einer Stange mit quadratischem Querschnitt ganz erheblich. Es werden daher auch zusätzliche Materialkosten und zusätzliches Gewicht verursacht.

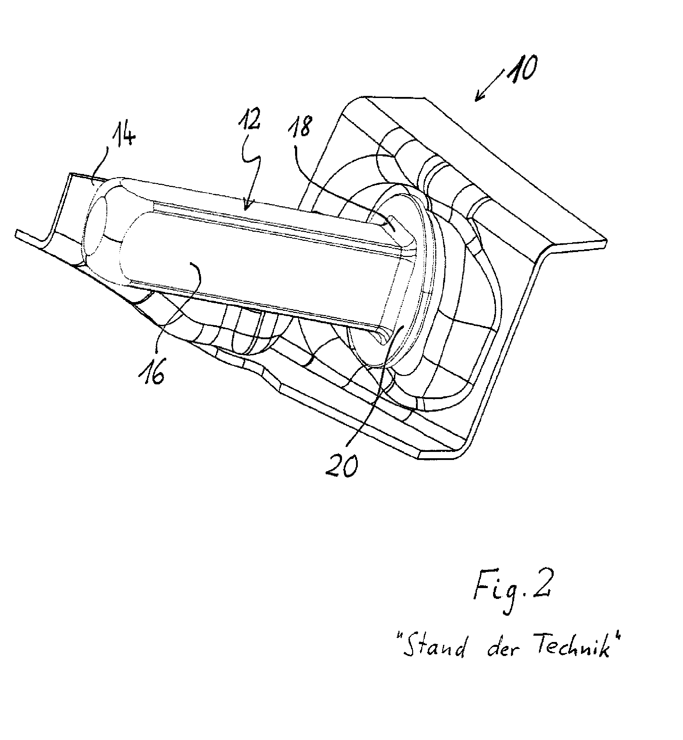

Die Figuren 2 bis 4 zeigen das Teil gemäß dem Stand der Technik aus anderen Perspektiven, um den Ausgangspunkt der vorliegenden Erfindung noch besser verständlich zu machen.

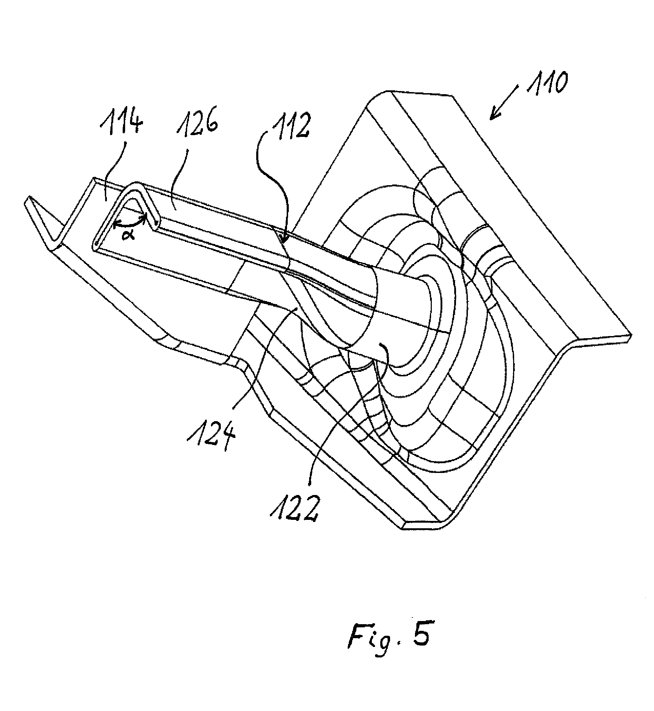

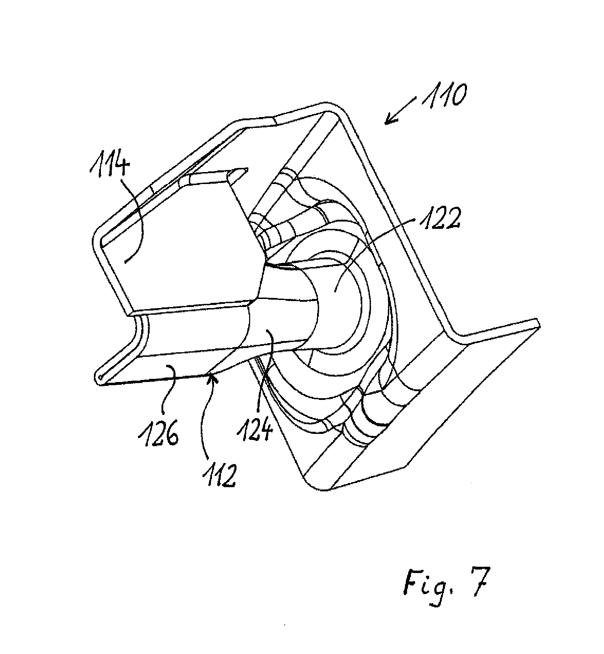

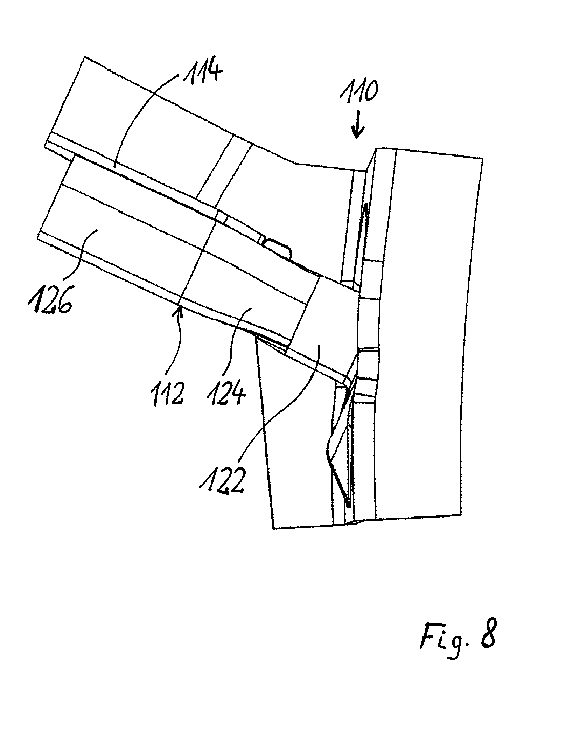

Ausgehend von diesem Stand der Technik soll nun die vorliegende Erfindung anhand der Figuren 5 bis 8 näher erläutert werden.

Fig. 5 zeigt ein entsprechendes Blechbauteil 110, bei dem ebenfalls ein Durchzug 112 vorgesehen ist, der mit einem Blechteil 114 durch Punktschweißen, Buckelschweißen, Kleben oder Löten verbunden werden soll. Der Durchzug 112 ist hierbei als in der Blechumformtechnik übliche Tube direkt und einstückig aus dem Blechteil 110 ausgeformt. Der Durchzug 112 weist dabei in der Nähe des Bleches des Blechbauteiles 110 aus dem er gezogen ist, einen zylindrischen Abschnitt 122 mit relativ dicken Wänden auf. Dieser Abschnitt 122 kann beispielsweise dazu dienen, ein entsprechendes Innengewinde aufzunehmen.

In dem von dem Blechbauteil 110 weiter entfernten Abschnitt 124 ist der Durchzug durch Aufweiten dünner gestaltet, wodurch gleichzeitig der Gesamtdurchmesser des Durchzugs vergrößert worden ist. In diesem Bereich ist der Durchzug daher leichter verformbar, gleichzeitig steht eine größere Fläche zur Verfügung. In dem von dem Blechbauteil 110 am weitesten entfernten Endabschnitt 126 des Durchzugs 112 ist dieser zusätzlich zu der Aufweitung durch Eindrücken und/oder Anprägen dergestalt in sich gefaltet, dass die Seitenwände direkt aufeinander liegen und sich die bisherigen Innenflächen des Durchzugs somit berühren Vorzugsweise erfolgt die Faltung in einem L-förmigen Querschnitt mit einem Winkel α dazwischen Ebenfalls ist ein U-förmiger Querschnitt vorteilhaft. Vorzugsweise beträgt der Winkel α zwischen den beiden Schenkeln etwa 90°. An den äußeren Oberflächen dieser beiden Schenkel kann dann mit ausreichender Berührungsfläche beispielsweise hier das Blech 114 durch Punktschweißen, Buckelschweißen, Kleben oder Löten angebracht werden. Ebenso kann an der Außenseite des anderen Schenkels des Abschnittes 126 bei Bedarf ein weiteres Blech angebracht werden.

Sowohl von der Fertigungstechnik als auch von der Stabilität her ist es dabei besonders bevorzugt, wenn die beiden entstandenen Schenkel, die den Winkel α einschließen, etwa gleich lang sind und der Winkel α abgerundet ausgebildet ist.

Hergestellt wird die beschriebene Gestalt des Endabschnittes 126 des Durchzuges 112 vorzugsweise durch Eindrücken mit einem Werkzeug mit einer entsprechenden Kante in eine Form mit einer entsprechenden Gegenkante, in dem vorher bereits aufgeweiteten Abschnitt 124, 126 des Durchzugs 112.

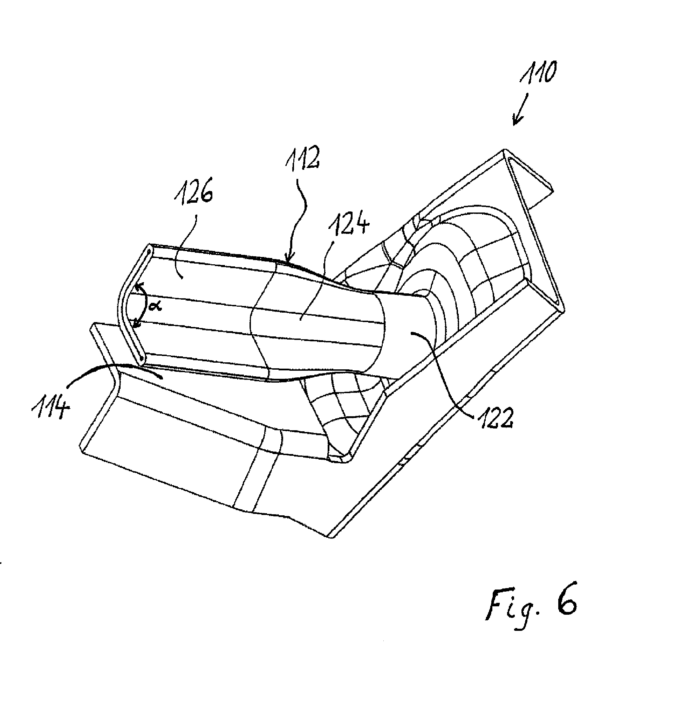

Die Figuren 6, 7 und 8 stellen das gleiche Blechbauteil 110 mit dem erfindungsgemäß ausgebildeten Durchzug 112 aus anderen perspektivischen Ansichten dar, um das Verständnis der Erfindung weiter zu verbessern.

## Patentansprüche

1. Verschweißbarer Durchzug (112),
**dadurch gekennzeichnet, dass**
er durch Eindrücken oder Anprägen zumindest über einen Teil (126) seiner Länge so zusammengedrückt ist, dass sich die gegenüberliegenden Innenflächen der Tube berühren.

2. Verschweißbarer Durchzug (112) nach Anspruch 1,
**dadurch gekennzeichnet, dass**
der zusammengedrückte Teil (126) der Tube einen L- oder U-förmigen Querschnitt aufweist.

3. Verschweißbarer Durchzug (112) nach Anspruch 1 oder 2,
**dadurch gekennzeichnet, dass**
der durch Eindrücken oder Anprägen zusammengedrückte Teil (126) des Durchzuges (112) vorher aufgeweitet worden ist.

4. Verschweißbarer Durchzug (112) nach Anspruch 2 oder 3 mit einem zusammengedrückten Teil (126) mit einem L-förmigen Querschnitt,
**dadurch gekennzeichnet, dass**
der Winkel (α) im L-förmigen Querschnitt abgerundet ist und etwa 90° beträgt.

5. Verschweißbarer Durchzug (112) nach Anspruch 3,
**dadurch gekennzeichnet, dass**
die beiden Schenkel des L-förmigen Querschnittes etwa gleich lang sind.
